# EUROPEAN PATENT APPLICATION

(11) **EP 2 966 552 A1**
(43) Date of publication of application: **13.01.2016**
(21) Application number: 15175039.5
(22) Date of filing: 02.07.2015
(51) Int. Cl.: G06F 3/042, G06F 21/31, H04L 9/32

(54) **APPARATUS AND METHOD FOR PROVIDING FEEDBACK ON INPUT DATA**

(30) Priority: 11.07.2014 EP 14306139
(71) Applicant: Thomson Licensing, 92130 Issy-les-Moulineaux (FR)
(72) Inventor: MAETZ, Yves, 35576 Cesson-Sévigné (FR); ELUARD, Marc, 35576 Cesson Sévigné (FR); HEEN, Olivier, 35576 Cesson Sévigné (FR)
(74) Representative: Ståhl, Björn Niclas

(57) **Abstract**

A method and an apparatus for providing feedback on input of data. A processor (111) iteratively receives (S52) a character of the data and generates (S55; S56) a feedback output from the received character and a feedback output generated previously. The processor (111) also outputs (S57) the feedback output. The processor (111) preferably belongs to an apparatus that further comprises a user interface (113), through which the data is received. It is preferred that the feedback output is an image, preferably generated from at least one of geometric shapes, colours, rotations of the image and flips of the image. The feedback output for a first received character can be based on the first received character and a starting output and it is preferable that when the data are a password, the starting output is generated from user related data.

## Description

### TECHNICAL FIELD

The present disclosure relates generally to computer systems and in particular to providing feedback to data input in such systems.

### BACKGROUND

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

Passwords are ubiquitous in today's computer systems, for example to authenticate a user for log-on. In its generic definition, a password is constituted of a succession of symbols taken within a predefined alphabet (for example: 4 numerical values for PIN code). A password is generally stronger the longer it is, in particular if the password is a mixture of uppercase and lowercase letters, numbers, and characters such as &, " and #. However, a more complicated password is generally more complicated to type properly, especially since the typed characters do not appear on the screen. In addition, since users may be obliged to input the passwords many times a day, the passwords are often typed very quickly. It is thus not surprising that an input password can contain typing errors. Moreover touchscreen-based devices like smartphones and tablets use virtual keyboards to enter some text, including passwords. With this type of input, typing errors can be quite frequent.

One way of reducing the occurrence of errors is to provide some kind of feedback to the user.

A very common way of doing so is to display a predetermined symbol, for example an asterisk or a filled circle, for each character input by the user. The user can then see if the correct number of characters have been input.

Another technique is to use a visual hash (see Perrig A. and Song D.,"Hash Visualization: a New Technique to improve Real-World Security", International Workshop on Cryptographic Techniques and E-Commerce (CrypTEC '99), 1999). The technique is similar to classical hash values, but outputs an image instead of a scalar. It associates an image to a character string in such a way that: i) the probability that two different strings lead to the same image is negligible, ii) if one bit in the string changes then all the image changes. The second property is very important for security applications but can be confusing when applied to the input of password, since the user will see a constantly changing picture while typing the password, which makes it difficult to memorize which image corresponds to which keystroke sequence.

Google Chrome can be used with an extension called HashMask, which is very similar to the Visual Hash. It provides a feedback picture that changes with each typed character and is equivalent to a visual hash plus incremental modification of the HashMask.

The characteristic of these proposals has a main drawback: it makes it more difficult for the user to remember the feedback picture and it may even be annoying to a user since the changes are too strong.

It can therefore be appreciated that there is a need for a solution that can allow more easily remembered feedback pictures. The present disclosure provides such a solution. It will also be appreciated that the solution can be used for other kinds of, not necessarily secret, data, e.g. login names, email address, bank account number, WIFI keys and IP addresses.

### SUMMARY

In a first aspect, the disclosure is directed to an apparatus for providing feedback on input of data comprising an input interface configured to receive characters of the data in an ordered series, a processing unit configured to generate iteratively a non-cleartext feedback from the characters of the data based on feedback for a current received character and the non-cleartext feedback generated for a preceding character in the ordered series, wherein the feedback for the current received character is different for different characters, and an output interface configured to output the feedback output.

Various embodiments of the first aspect include:
- that the non-cleartext feedback is an image is generated from at least one of geometric shapes, colors, rotations of the image and flips of the image.
- that the non-cleartext feedback is made up of at least one of sounds, haptic signals in a virtual scene and a sequence of moves of an avatar.
- that the feedback for the current received character is added to the feedback output generated for the preceding character. The feedback for the current received character can cancel identical output in the feedback output generated for the preceding character.
- that the feedback for a first received character is based on feedback for the first received character and a starting feedback. The starting feedback can be generated from an item of user data other than the password.
- that the processor is configured to process blocks of input characters to generate feedback output in each iteration.

In a second aspect, the disclosure is directed to a method for providing feedback on input of data. A processor iteratively receives a character of the data, the character being a first character or a character immediately following a preceding character in the data, generates a non-cleartext feedback from the first character, or from the character immediately following a preceding character in the data and a non-cleartext feedback generated for the preceding character, and outputs the non-cleartext feedback.

Various embodiments of the second aspect include:
- that the outputting is iteratively performed.
- that the non-cleartext feedback for the first character is generated from the first character and a starting feedback.
- that the non-cleartext feedback is an image is generated from at least one of geometric shapes, colors, rotations of the image and flips of the image.
- that the non-cleartext feedback is made up of at least one of sounds, haptic signals in a virtual scene and a sequence of moves of an avatar.

In a third aspect, the disclosure is directed to a non-transitory computer program storage device having instructions that, when executed by a processor, performs the method of any embodiment of the second aspect.

### BRIEF DESCRIPTION OF DRAWINGS

Preferred features of the present disclosure will now be described, by way of non-limiting example, with reference to the accompanying drawings, in which
Figure 1 illustrates an exemplary system of the present disclosure;
Figure 2 illustrates a user interface of an embodiment of the present disclosure;
Figure 3 illustrates a first embodiment of the present disclosure;
Figure 4 further illustrates the first embodiment of the present disclosure;
Figure 5 illustrates a second embodiment of the present disclosure; and
Figure 6 illustrates an exemplary method of the present disclosure.

### DESCRIPTION OF EMBODIMENTS

The disclosure relates particularly to treatment of passwords, which will be used herein as a non-limitative example. As already mentioned, the solution can also apply when other kinds of data - login names, email address, bank account number, WiFi keys, IP addresses and so on - are input.

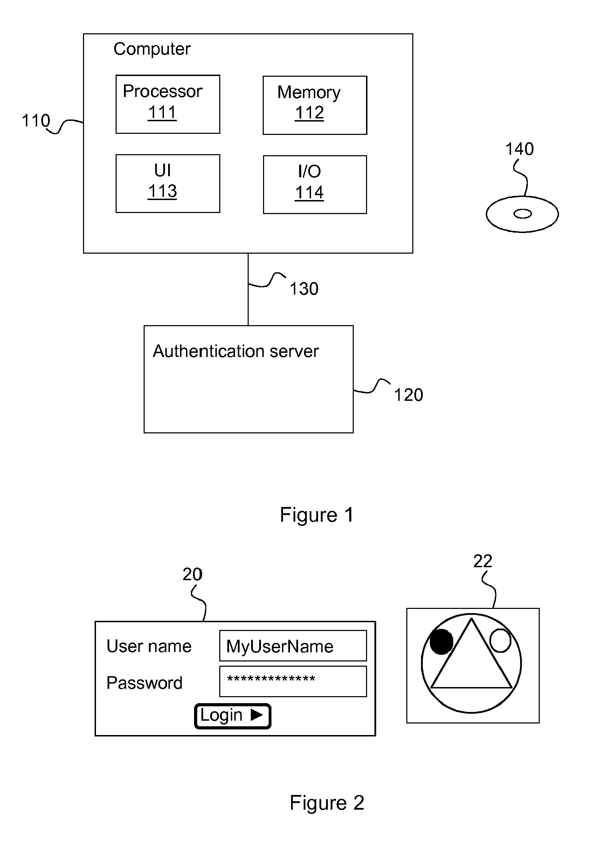

Figure 1 illustrates an exemplary system in which the disclosure may be implemented. The system comprises a computing device ("computer") 110 and an authentication server 120 (but it will be appreciated that the latter is beyond the scope of the present disclosure). The computer 110 can be any kind of suitable computer or device capable of performing calculations, such as a standard Personal Computer (PC) or workstation and it preferably comprises at least one hardware processor 111, internal or external RAM memory 112, a user interface 113 for interacting with a user, and a second interface 114 for interaction with other devices such as the authentication server over connection 130. The user interface 113 may be implemented as having an input user interface, for example a keyboard, and an output user interface, for example a display, but the input user interface and the output user interface may also be implemented jointly, for example in a touchscreen. The computer 110 also preferably comprises an interface for reading a software program from a non-transitory digital data storage device 140, such as a DVD or a CD-ROM, that stores instructions that, when executed by a processor, performs any of the methods described hereinafter. The skilled person will appreciate that the illustrated devices are very simplified for reasons of clarity and that a more detailed illustration would comprise features such as persistent storage that are well understood. The skilled person will also appreciate that if the password just provides access to the computer itself then the present disclosure may also be implemented on just the computer 110; in this instance, the authentication server 120 is implemented in the computer. In a variant (not illustrated), the computer 110 receives the password from a device on which the user entered the password. Similarly, the processor can output data through a user interface on a device (not shown) different from the computer.

A goal is to provide a user entering critical data such as, in one example, a password, with a visual feedback image relating to the correctness of the entered password. As with for example Visual Hash, the feedback image corresponds to the text input by the user. It is naturally preferred that the feedback image is easy to compare with the expected result (potentially preprinted on a visual media, such as paper).

However, different from the prior art solutions, the proposed feedback image preferably allows easy comparison, is easy to recognize, is easy to remember, and results from a non-injective function (meaning that several proposals correspond to the same feedback image) with a certain number of collisions.

As with the prior art solutions, the present solution can easily be integrated in existing systems that do not use other visual feedback than the display of the hidden password (i.e. with asterisks). This can be done by adding a display area that displays the feedback image that corresponds to the proposal typed by the user, which allows the user to verify visually the input password before it is validated (e.g. by clicking on a login enter button). In one embodiment, the feedback image is updated iteratively with each input character, but it is also possible to provide the feedback image only upon a first click on a validate button, upon input of a given number of characters or after input of each block of a given number of characters.

Figure 2 illustrates an example of a traditional login interface 20 to which an area 22 displaying a feedback image has been added.

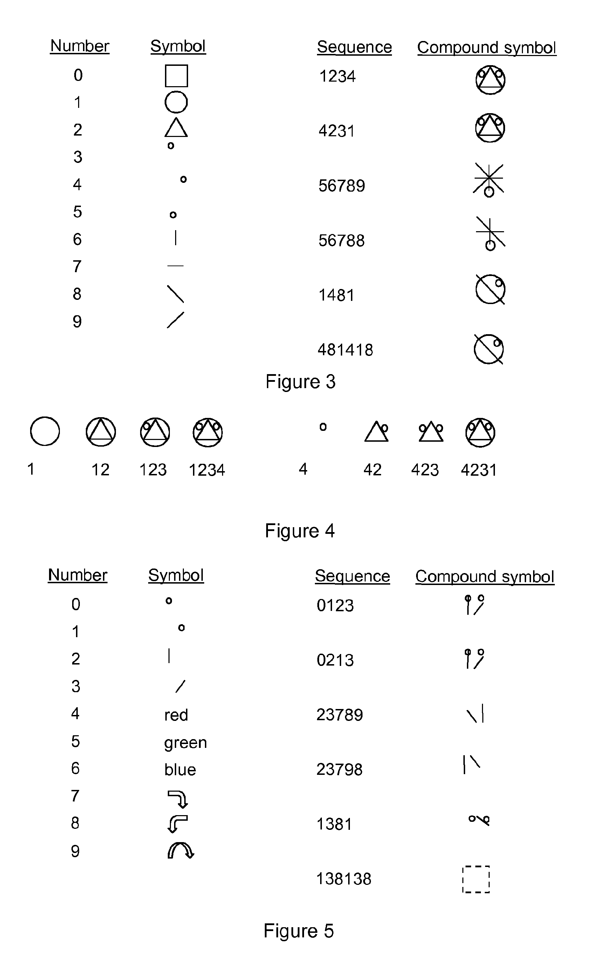

Figure 3 illustrates a first embodiment using cumulative geometrical elements. The embodiment will be illustrative using only numbers 0-9, commonly used for PIN codes. To the left of the Figure are illustrated geometrical elements associated with the numbers, each number preferably being associated with a different geometrical element.

As can be seen, the numbers and symbols are associated as follows: 0 to a square, 1 to a large circle, 2 to a triangle, 3 to a small circle up to the left, 4 to a small circle up to the right, 5 to a small circle to the lower middle, 6 to a vertical line, 7 to a horizontal line, 8 to a diagonal line upper left to lower right, and 9 to a diagonal line lower left to upper right. Naturally, these are just examples.

As mentioned, in this embodiment the geometrical elements are cumulative. In other words, each entered number adds (preferably by overlay) a geometrical element to a compound symbol that makes up the feedback image. Exemplary results of feedback images are illustrated to the right of Figure 3. It can be seen that the sequences 1234 and 4231 result in the same compound symbol, since the numbers in the sequences are the same; the difference in order does not affect the compound symbol. The compound symbols for 1481 and 481418 are also the same since the numbers are the same and independent of the number of occurrences of each number. 56789 and 56788 differ in that the first comprises a 9 that the second does not have and the resulting compound symbols expectedly differ in that the second does not comprise the symbol corresponding to the number 9: a diagonal line from lower left to upper right.

As already mentioned, it is preferred that the feedback image is updated iteratively with each input character. This allows to take into account the order of the elements as can be seen in Figure 4 that illustrates how the feedback images for 1234 and 4231 are different until after the fourth digit has been input. It may be that the feedback image is displayed only upon a user instruction; in this instance, the feedback image can either be generated iteratively but not displayed or generated upon reception of the user instruction.

Figure 5 illustrates a second embodiment using exclusive geometrical elements and operations. As in Figure 3, the embodiment will be illustrated using only numbers 0-9, the left half of the Figure illustrates geometrical elements and operations associated with the numbers and the right half illustrates feedback images corresponding to various number sequences.

In the second embodiment shown in Figure 5, numbers 0-3 are associated with geometrical forms: 0 with a small circle to the upper left, 1 with a small circle to the upper right, 2 with a vertical line to the left and 3 with a diagonal line from the middle of the lower edge to the middle of the right edge. Numbers 4-6 are associated with colours: 4 with red, 5 with green and 6 with blue. Finally, numbers 7-9 are associated with geometrical operations: 7 turns the feedback image 90° clockwise, 8 turns the feedback image 90° counter clockwise and 9 flips the feedback image horizontally.

It will be appreciated that a plurality of geometrical forms and operations can be optionally applied to one character if desired. For example, the number 0 can be associated to a square, a 10° clockwise rotation, an increase of the size of 10% and a modification of the colour by adding 30% of red.

It is also possible to provide a starting feedback image that is given before any character of the password is input. It is preferable that the starting feedback image is the same every time a given user name is used, but the starting image may be generated from an item of data related to the user other than the password, such as the user name and thus different between different user data. In the case where multiple pieces of information are available, any of them may be chosen and combined to generate the starting feedback image. This is the same notion as the notion of salt in cryptography.

It is further possible to generate the feedback image from blocks of input characters instead of the complete entry. This results in a set of images corresponding to the different blocks.

In another embodiment, a second entry of a number associated with a geometrical element can remove that geometrical element. Apart from that, the effect of the numbers is cumulative.

For illustrative purposes, numbers 4-6 that correspond to colours are not used in the exemplary feedback images. 0123 and 0213 have the same resulting compound symbol since they comprise the same numbers that do not correspond to any geometric operation. 23789 and 23798 comprise the same geometric elements but are different since the geometric operations were performed in a different order. 1381 and 138138 are different. For 1381, the geometric element for 1 was cancelled by the second 1; in 138138, all the numbers occur twice leading to a feedback image without any geometric elements (illustrated by a dashed square).

Other kinds of feedback than images can be given, such as for example sounds, haptic signals in a virtual scene and a sequence of moves of an avatar.

An example of a use case involving other input than passwords is the input of WiFi keys. The characters of the WiFi key are preferably associated with a feedback image - possibly generated only when the final character has been input - so that the user can compare the feedback image with a reference feedback image, for example printed on a sticker attached to the WiFi device in question, for example an ADSL gateway.

As already mentioned, the feedback image can be updated iteratively, but it may be preferable to display it only when a condition is reached, such as when the user clicks a first time on "login", after a period of inactivity, when the user clicks on a specific button or icon that activates the display, or when the last character of a WiFi key has been input.

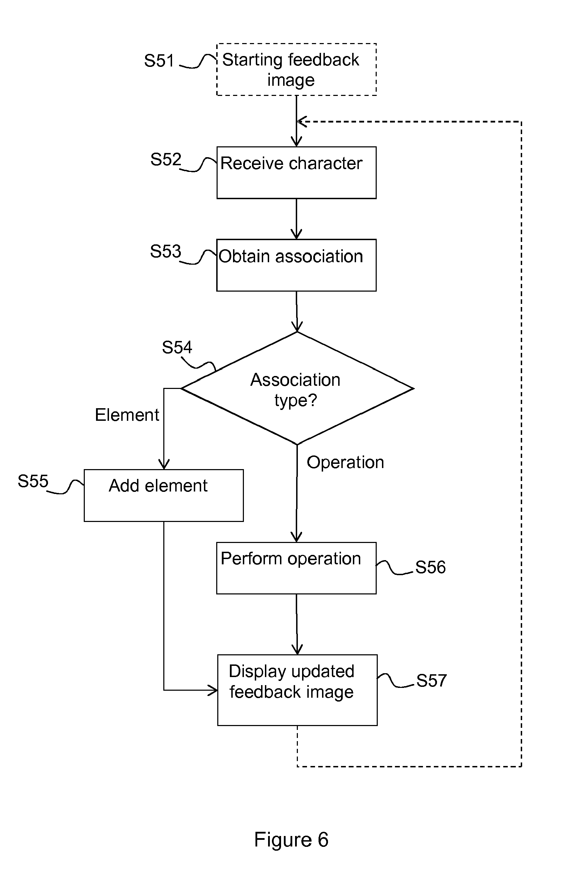

Figure 6 illustrates an exemplary method of generation of a feedback image according to an embodiment. The method, which generally corresponds to the example in Figure 4, is performed by the computer 110.

In optional step S51, the computer 110 displays a starting feedback image, i.e. an image that is displayed before any characters have been received. The computer 110 then receives a character at step S52. Step S53 obtains the association with the character and step S54 determines if the association relates to a geometrical element or to a geometrical operation. In the instance where the association relates to a geometrical element, the computer at step S55 adds the corresponding graphical element. In this exemplary method, adding includes using an XOR type of operation so that addition of an element on top of an existing element of the same kind removes the element. In the instance where the association relates to a geometrical operation, the computer at step S56 performs the operation. The computer then displays at step S57 the updated feedback image. The method can then be iterated from step S52 upon reception of a further character. The skilled person will appreciate that this method easily can be extended to associate a plurality of geometric forms and operations to each character, as explained hereinbefore.

In some use instances, the user may want to delete previous character entries. This desire may be accommodated by the present invention by generating a new feedback with the modified character entries. With the input 123456, if the user removes the character 3, the system will generate a new feedback with the modified characters entry 12456. Other techniques may be used to solve this issue. A solution based on versioning consists in saving all generated feedbacks (for the input 1, for 12, for 123, etc.). In case of removal, the system restores the last compatible version with the modified characters entry (using the same example as before: we will restore the feedback for the entry 12) and then apply the generation for the remaining characters (456). Another technique could be used if the generation is reversible. In this case, the reverse function is applied on the removed character to generate the new feedback. Depending on the type of deletion, it is possible to use optimized techniques such as caching for the deletion of the last character. The insertion of a new character in the character entries can be solved using the same techniques. The skilled person will appreciate that other techniques could be implemented, depending on the method used for the feedback generation.

It will be appreciated that the present disclosure can provide a system that provides feedback to the user about input data that overcomes at least part of the problems of the prior art.

Each feature disclosed in the description and (where appropriate) the claims and drawings may be provided independently or in any appropriate combination. Features described as being implemented in hardware may also be implemented in software, and vice versa. Reference numerals appearing in the claims are by way of illustration only and shall have no limiting effect on the scope of the claims.

Additionally, the methods described herein may be implemented by instructions being performed by a processor, and such instructions may be stored on a processor or computer-readable media such as, for example, an integrated circuit, a software carrier or other storage device such as, for example, a hard disk, a compact diskette ("CD" or "DVD"), a random access memory ("RAM"), a read-only memory ("ROM") or any other magnetic, optical, or solid state media. The instructions may form an application program tangibly embodied on a non-transitory computer-readable medium such as any of the media listed above or known to those of skill in the art.

## Claims

1. An apparatus (110) for providing feedback on input of data comprising:
an input interface (113) configured to receive characters of the data in an ordered series;
a processing unit (111) configured to generate iteratively a non-cleartext feedback from the characters of the data based on feedback for a current received character and the non-cleartext feedback generated for a preceding character in the ordered series, wherein the feedback for the current received character is different for different characters; and
an output interface (113) configured to output the feedback output.

2. The apparatus of claim 1, wherein the non-cleartext feedback is an image is generated from at least one of geometric shapes, colors, rotations of the image and flips of the image.

3. The apparatus of claim 1, wherein the non-cleartext feedback is made up of at least one of sounds, haptic signals in a virtual scene and a sequence of moves of an avatar.

4. The apparatus of claim 1, wherein the feedback for the current received character is added to the feedback output generated for the preceding character.

5. The apparatus of claim 4, wherein the feedback for the current received character cancels identical output in the feedback output generated for the preceding character.

6. The apparatus of claim 1, wherein the feedback for a first received character is based on feedback for the first received character and a starting feedback.

7. The apparatus of claim 6, wherein the data are a password and wherein the starting feedback is generated from an item of user data other than the password.

8. The apparatus of claim 1, wherein the processor (111) is configured to process blocks of input characters to generate feedback output in each iteration.

9. A method for providing feedback on input of data, the method being performed by a processor (111) and comprising:
- iteratively receiving (S52) a character of the data, the character being a first character or a character immediately following a preceding character in the data;
- generating (S55; S56) a non-cleartext feedback from the first character, or from the character immediately following a preceding character in the data and a non-cleartext feedback generated for the preceding character; and
- outputting (S57) the non-cleartext feedback.

10. The method of claim 9, wherein also the outputting is iteratively performed.

11. The method of claim 9, wherein the non-cleartext feedback for the first character is generated from the first character and a starting feedback.

12. The method of claim 9, wherein the non-cleartext feedback is an image is generated from at least one of geometric shapes, colors, rotations of the image and flips of the image.

13. The method of claim 9, wherein the non-cleartext feedback is made up of at least one of sounds, haptic signals in a virtual scene and a sequence of moves of an avatar.

14. A non-transitory computer program storage device (140) storing instructions that, when executed by a processor (111) performs the method of claim 9.
